# EUROPÄISCHE PATENTSCHRIFT

(11) **EP 2 106 679 B1**
(45) Veröffentlichungstag und Bekanntmachung des Hinweises auf die Patenterteilung: **26.08.2015**
(21) Anmeldenummer: 08153919.9
(22) Anmeldetag: 01.04.2008
(51) Int. Cl.: A01B 45/02

(54) **Bodenbelüftungsvorrichtung**
Soil aerating device
Dispositif d'aération au sol

(43) Veröffentlichungstag der Anmeldung: 07.10.2009
(73) Patentinhaber: Redexim Handel- en Exploitatie Maatschappij B.V., 3702 AC Zeist (NL)
(72) Erfinder: de Bree, Cornelius Hermanus Maria, 3702 AC Zeist (NL)
(74) Vertreter: Von Kreisler Selting Werner - Partnerschaft von Patentanwälten und Rechtsanwälten mbB

(56) Entgegenhaltungen:
- EP-A- 0 037 595
- DE-A1- 4 323 315
- DE-A1- 4 333 310
- NL-A- 8 101 743

## Beschreibung

Die Erfindung betrifft eine fahrbare Bodenbelüftungsvorrichtung nach dem Oberbegriff des Anspruchs 1.

Aus der NL 8101743 ist eine fahrbare Sodenbelüftungsvorrichtung bekannt, die einen Maschinenrahmen, einen Antrieb und mindestens einen von den Antrieb auf- und abbewegten und an den Maschinenrahmen schwenkbar angeordneten Führungsarm aufweist, wobei der Führungsarm mit mindestens einem Stechwerkzeug gelenkig gekoppelt ist, wobei das Stechwerkzeug in den Boden einstechbar und wieder herausziehbar ist.

Derartige Vorrichtungen dienen dazu, mit Hilfe von Stechwerkzeugen Hohlräume In einen Boden einzubringen, wobei in die tieferen Bereiche des Bodens schlitzförmige Hohlräume eingebracht werden und an der Bodenfläche möglichst kleine Löcher auch bei höheren Fahrgeschwindigkeiten verbleiben sollen. Die Hohlräume ermöglichen einen besseren Abfluss von Wasser und Verbessern die Bodenbelüftung und durch die Auflockerung des Bodens wird das Pflanzenwachstum, insbesondere von Gräsern, verbessert.

Die bislang für solche Zwecke verwendeten, aus der europäischen Offenlegungsschrift EP-A-0037595 bekannten Bodenbelüftungsvorrichtungen benutzen zwei parallelogrammartig geführte Tragarme, die am einen Ende schwenkbar einen Werkzeughalter halten und die am anderen Ende am Maschinenrahmen schwenkbar gelagert sind, Die Schubstange des Kurbeltriebs ist an dem Werkzeughalter angelenkt und treibt diesen an, so dass dieser eine Auf- und Abbewegung ausführt. Einer der beiden Tragarme ist längenveränderlich und beinhaltet eine Anschlagfedereinrichtung. Solange sich das Stechwerkzeug außerhalb des Bodens befindet, liegt der Tragarm aufgrund der Federkraft an dem Anschlag an. Bei eingestochenem Stechwerkzeug und Vorwärtsbewegung der Bodenbelüftungsvorrichtung verschwenkt das Stechwerkzeug mit dem Werkzeughalter entgegen der Fahrtrichtung und der längenveränderliche Tragarm wird gegen die Federkraft verlängert.

Bei den bisher bekannten Bodenbelüftungsvorrichtungen werden Federelemente verwendet, die auf die Stechwerkzeuge ein Rückstellmoment ausüben, so dass sich die Stechwerkzeuge, sobald sie sich außerhalb des Bodens befinden, wieder in die Ausgangslage zurückbewegen. Als Ausgangslage wird im Folgenden die Position bezeichnet, die das mindestens eine Stechwerkzeug kurz vor dem Einstechen aufweist. Außerhalb des Bodens wirkt jedoch, aufgrund der Massenträgheit und der Auf- und Abbewegung, das Trägheitsmoment von Werkzeughalter und Stechwerkzeug dem Rückstellmoment der Feder entgegen. Aus diesem Grund werden Federelemente mit hoher Federsteifigkeit verwendet, um die Stechwerkzeuge wieder in die Ausgangslage zurückzubewegen. Aufgrund der Federelemente mit hoher Federsteife besteht jedoch eine erhöhte Gefahr, dass die Stechwerkzeuge, wenn sie sich noch innerhalb des Bodens befinden, anstatt der gewünschten kleinen Löcher, Schlitze in die Bodenoberfläche einbringen können. Das Stechwerkzeug wird vorzugsweise durch das Federelement gegen einen Anschlag gezogen, der die Ausgangslage definiert. Wenn die Federsteifigkeit des Federelementes hoch ist, ist außerdem der Aufschlag des Stechwerkzeugs gegen den Anschlag hart, wodurch die Lager beschädigt werden können.

Der Erfindung liegt demzufolge die Aufgabe zugrunde, eine Vorrichtung der eingangs beschriebenen Art zu schaffen, bei der die Gefahr der Schlitzbildung reduziert ist.

Zur Lösung dieser Aufgabe dienen die Merkmale des Anspruchs 1.

Die Erfindung sieht in vorteilhafter Weise vor, dass bei einer Bodenbelüftungsvorrichtung der einleitend beschriebenen Art, ein Rückstellelement mit Abstand von der durch die erste Schwenkachse und parallel zu dem Werkzeughalter und dem Stechwerkzeug verlaufenden Ebene und in Richtung der auf den Werkzeughalter einwirkenden Rückstellkraft des Rückstellelementes versetzt an dem Werkzeughalter angreift, wodurch der um die erste Schwenkachse wirksame Hebelarm der Rückstellkraft zumindest bei maximaler belarm der Rückstellkraft zumindest bei maximaler Auslenkung des Werkzeughalters relativ zur Ausgangslage vergrößert ist.

Ein größerer Hebelarm hat bei gleicher Kraft ein größeres Moment zur Folge. Daher ist das Rückstellmoment, das bei maximaler Auslenkung des Werkzeughalters auf den Werkzeughalter wirkt, größer als das Rückstellmoment, das in Ausgangslage auf den Werkzeughalter wirkt. Aus diesem Grund kann die Federsteifigkeit reduziert werden, wodurch die Schlitzgefahr reduziert ist und die Maschinenelemente geringer mechanisch belastet werden, da die Stöße z.B. gegen einen Anschlag reduziert sind.

Das Rückstellelement greift vorzugsweise um einen solchen Betrag versetzt an, dass sich der Kraftangriffspunkt des Rückstellelementes bei maximaler Auslenkung des Werkzeughalters in einer durch die erste Schwenkachse verlaufenden im wesentlichen vertikalen Ebene befindet.

Das Rückstellelement verläuft vorzugsweise im wesentlichen parallel zu dem Führungsarm.

Das Rückstellelement ist gelenkig mit dem Werkzeughalter verbunden. Das Rückstellelement kann eine Zugfeder sein.

Das Rückstellelement kann in einem mit dem Maschinenrahmen und dem Werkzeughalter gelenkig gekoppelten zweiten Führungsarm integriert sein.

Der zweite Führungsarm kann eine Zugkraft auf den Werkzeughalter ausüben, wobei eine Druckfeder die Zugkraft erzeugt.

Der Kraftangriffspunkt des Rückstellelementes ist vorzugsweise mittig zur Breite des Werkzeughalters angeordnet. Dies hat den Vorteil, dass keine Torsionskräfte auf den Werkzeughalter einwirken und die Lager der Führungsarme nicht unsymmetrisch belastet werden.

Der Kraftangriffspunkt des Rückstellelementes kann unterhalb der ersten Schwenkachse und in Richtung der auf den Werkzeughalter einwirkenden Rückstellkraft versetzt an einem von dem Werkzeughalter abstehenden Vorsprung angeordnet sein. Dies hat den zusätzlichen Vorteil, dass dadurch der Gesamtschwerpunkt von Werkzeughalter und Stechwerkzeug derart verschoben ist, dass bei maximaler Auslenkung ein geringeres Trägheitsmoment auf den Werkzeughalter und das Stechwerkzeug einwirken. Aufgrund des Trägheitsmomentes neigen nämlich der Werkzeughalter und das Stechwerkzeug dazu, nach oben zu schwenken.

Der Werkzeughalter trägt vorzugsweise mehrere Werkzeuge.

Im folgenden werden unter Bezugnahme auf die Zeichnungen Ausführungsbeispiele der Erfindung näher erläutert.

Es zeigen schematisch:
- Fig. 1: eine Seitenansicht auf eine Bodenbearbeitungsmaschine,
- Fig. 2: eine Seitenansicht auf ein Ausführungsbeispiel wie es aus dem Stand der Technik bekannt ist,
- Fig.3: Geschwindigkeit und Beschleunigungsverläufe bei konstanter Winkelgeschwindigkeit des Kurbeltriebs,
- Fig.4: Detailansicht des Ausführungsbeispiels aus Fig. 2,
- Fig.5: ein Ausführungsbeispiel der vorliegenden Erfindung,
- Fig.6: Detailansicht des Ausführungsbeispiels aus Fig.5,
- Fig.7: Frontansicht des Ausführungsbeispiel aus Fig.6,
- Fig. 8: Rückansicht eines erfindungsgemäßen Ausführungsbeispiels.

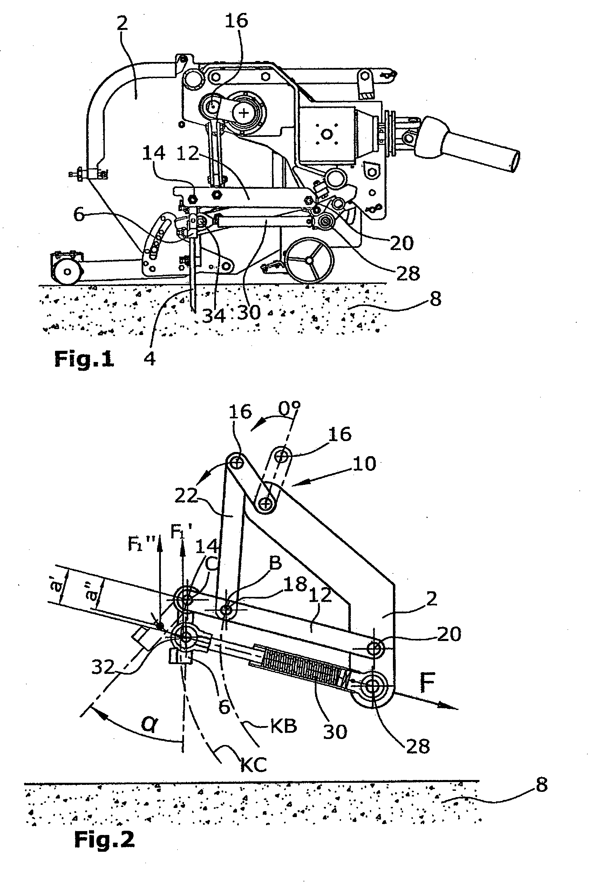

Fig. 1 zeigt eine Seitenansicht einer fahrbaren Bodenbelüftungsvorrichtung 1, die selbstfahrend ist oder mit Hilfe einer Zugmaschine gezogen werden kann. Diese Bodenbelüftungsvorrichtung 1 weist einen Maschinenrahmen 2 auf, an dem über Führungsarme 12 mehrere durch einen Antrieb 10 auf- und abbewegbare Stechwerkzeuge 4 schwenkbar und geführt gelagert sind. Die Stechwerkzeuge 4 werden aufgrund der Auf- und Abbewegung abwechselnd in den Boden 8 eingedrückt und führen in dem Boden 8 aufgrund der Vorwärtsbewegung der Bodenbelüftungsvorrichtung 1 eine Kippbewegung aus. Dadurch wird der Boden 8 unterhalb des Einstechlochs aufgebrochen, wodurch beispielsweise die Belüftung und/oder Drainage des Bodens 8 verbessert wird. Dabei soll das Einstechloch in der Bodenoberfläche auch bei einer hohen Fahrgeschwindigkeit der Bodenbelüftungsvorrichtung 1 möglichst klein bleiben. Das mindestens eine Stechwerkzeug 4 wird einzeln oder als Gruppe an einem Werkzeughalter 6 befestigt. Der Werkzeughalter 6 wird von einem Führungsarm 12 geführt. Der Führungsarm 12 wird vorzugsweise durch einen Kurbeltrieb 10 angetrieben und führt eine Auf- und Abbewegung aus. Alternativ ist es auch möglich, den Führungsarm 12 hydraulisch oder elektrisch anzutreiben.

An dem Führungsarm 12 ist der Werkzeughalter 6 um eine erste Schwenkachse 14 schwenkbar gelagert, wobei der Werkzeughalter 6 ein Stechwerkzeug 4 oder eine Gruppe von Stechwerkzeugen 4 aufnimmt, die aufgrund der Auf- und Abbewegung in den Boden 8 einstechbar und wieder herausziehbar sind. Es können mehrere, vorzugsweise nebeneinander angeordnete Stechwerkzeuge 4 oder nebeneinander angeordnete Gruppen von Stechwerkzeugen 4, angetrieben werden. Die Stechwerkzeuge 4, bzw. Gruppen von Stechwerkzeugen 4, werden bevorzugt phasenverschoben angetrieben.

Fig. 2 zeigt eine Seitenansicht auf ein Ausführungsbeispiel, wie es aus dem Stand der Technik bekannt ist. Ein Kurbeltrieb 10 treibt über eine Schubstange 22 den Führungsarm 12 an. Die Schubstange 22 ist in einem ersten Schwenklager 18 an dem parallel zur Fahrtrichtung verlaufenden Führungsarm 12 gelagert. Der Führungsarm 12 ist in einem zweiten Schwenklager 20 am Maschinenrahmen 2 schwenkbar gelagert. An dem Führungsarm 12 ist ein Werkzeughalter 6 um eine erste Schwenkachse 14 schwenkbar gelagert. An dem Werkzeughalter 6 ist mindestens ein Stechwerkzeug 4 fest angebracht. Die Achsen der Schwenklager 18,20 und die erste Schwenkachse 14 verlaufen parallel zur Bodenoberfläche des Bodens 8 und orthogonal zur Fahrtrichtung.

Im wesentlichen parallel zu dem Führungsarm 12 und unterhalb von diesem ist ein Rückstellelement 30 angebracht. Das Rückstellelement 30 ist auf der einen Seite an dem Maschinenrahmen 2 und auf der gegenüberliegenden Seite am Werkzeughalter 6 schwenkbar gelagert. Das Rückstellelement 30 lässt ein Verschwenken des Werkzeughalters 6 um die erste Schwenkachse 14 zu und übt bei Wegfall des Bodeneingriffs in dem Kraftangriffspunkt 32, in dem das Rückstellelement 30 an dem Werkzeughalter 6 gelagert ist, eine Rückstellkraft F auf den Werkzeughalter 6 aus, so dass das Stechwerkzeug 4 nach dem Herausziehen aus dem Boden 8 wieder in die Ausgangslage zurückschwenkt. Die Rückstellkraft F wirkt in Richtung der Längsachse des Rückstellelementes 30.

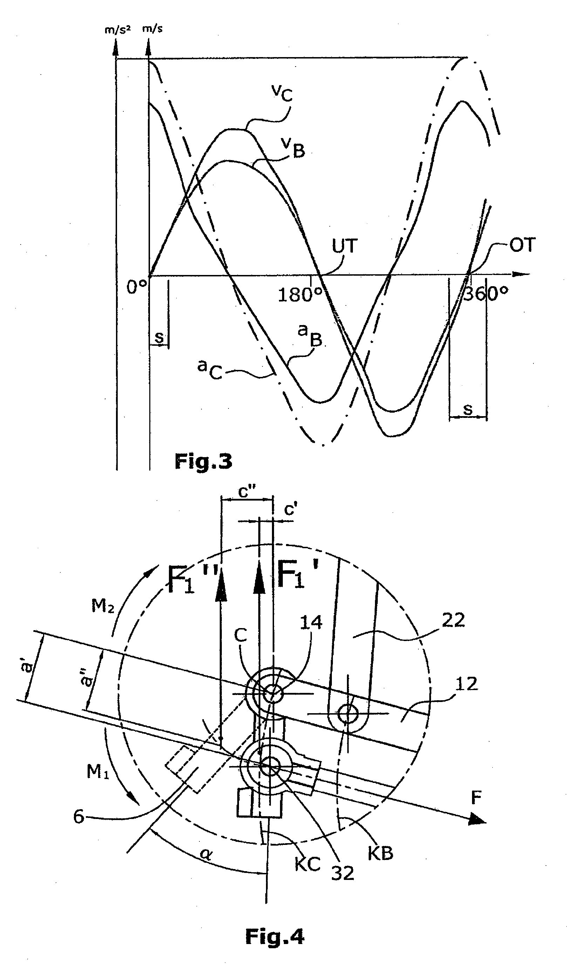

Der Führungsarm 12 führt, angetrieben durch die Schubstange 22 des Kurbeltriebs 10, insbesondere in den Punkten B und C, eine Auf- und Abbewegung aus. Der Führungsarm 12 schwenkt um das zweite Schwenklager 20, so dass der Führungsarm 12 in den Punkten B und C entlang der Kreisbahn KB und KC verschwenkt. Die Geschwindigkeiten v_{B} und v_{C}, mit denen sich die Punkte B und C des Führungsarms 12 auf- und abbewegen, wirken stets in Richtung tangential zu den Kreisbahnen KB und KC. Die Geschwindigkeiten v_{B} und v_{C} sind für eine konstante Winkelgeschwindigkeit des Kurbeltriebs 10 in Fig. 3 vereinfacht dargestellt. In Fig. 3 ist auf der x-Achse die Winkellage des Kurbelzapfens 16 angegeben. Die Punkte B und C des Führungsarms 12 erreichen den unteren Totpunkt UT, wenn der Kurbelzapfen 180° bereits überschritten hat. Dies ist der Fall, weil einerseits die Drehachse des Kurbeltriebs 10 und das erste Schwenklager 18 horizontal versetzt zueinander angeordnet sind und andererseits die Punkte B und C des Führungsarms 12, aufgrund der Schwenkbewegung des Führungsarms 12 um das zweite Schwenklager 20, keine exakt vertikale Bewegung ausführen.

In Fig. 3 sind ebenfalls die Beschleunigungsverläufe a_{B}, a_{C} der Punkte B und C des Führungsarms 12 dargestellt. Im oberen Totpunkt OT und im unteren Totpunkt UT der Auf- und Abbewegung, wo die Geschwindigkeiten v_{B} und v_{C} gleich null sind, erreichen die Beschleunigungen a_{B}, a_{C} ihren Maximalwert. Die Maximalwerte der Beschleunigungen a_{B}, a_{C} übersteigen die Erdbeschleunigung um ein Vielfaches. Die Stechwerkzeuge 4 befinden sich in dem mit S markierten Bereich außerhalb des Bodens. In diesem Bereich wirkt eine sehr hohe positive Beschleunigung auf die bei der Auf- und Abbewegung mitbewegten Massen. Die Beschleunigungen a_{B}, a_{C} wirken stets in Richtung tangential zu den Kreisbahnen KB,KC um das zweite Schwenklager 20. Da die Punkte B und C des Führungsarms 12 eine nahezu vertikale Bewegung ausführen, sind die Anteile der Beschleunigungen a_{B}, a_{C}, die in vertikale Richtung wirken, um ein Vielfaches höher als die horizontalen Komponenten der Beschleunigungen a_{B}, a_{C}. Das heißt, in dem Bereich außerhalb des Bodens wirkt eine sehr hohe Beschleunigung in vertikaler Richtung nach oben auf die bei der Auf- und Abbewegung mitbewegten Massen ein, d.h. auch auf den Werkzeughalter 6 und das mindestens eine Stechwerkzeug 4. Die Kraft, die aufgrund dieser Vertikalbeschleunigung auf den Werkzeughalter 6 und das Stechwerkzeug 4 wirkt, ist in Fign. 2 und 4 mit F₁' bzw. F₁" dargestellt.

Die Kraft F₁', F₁" wirkt im Gesamtschwerpunkt des Werkzeughalters 6 und des Stechwerkzeugs 4 auf den Werkzeughalter 6 und das Stechwerkzeug 4 ein. Die Kraft F₁', F₁" bewirkt zusammen mit dem wirksamen Hebelarm c', c" ein Moment M2 um die erste Schwenkachse 14. Aufgrund des Momentes M2 neigen der Werkzeughalter 6 und das Stechwerkzeug 4 dazu, solange sich das Stechwerkzeug 4 außerhalb des Bodens befindet, nach oben wegzuschwenken. Da die Kraft F₁', F₁" abhängig von der vertikalen Komponenten der Beschleunigung auf den Werkzeughalter und das Stechwerkzeug ist und damit abhängig von dem Quadrat der Geschwindigkeit ist, kann die Kraft F₁', F₁" leicht sehr groß werden, wenn die Stechwerkzeuge schnell in den Boden eingestochen und wieder herausgezogen werden.

Dem Moment M2 wirkt die Federkraft F des Rückstellelementes 30 entgegen, das den Werkzeughalter 6 und das Stechwerkzeug 4 wieder in die Ausgangslage zurückschwenken soll. Die Kraft F bildet zusammen mit dem wirksamen Hebelarm a', a" das Moment M1. Damit das Stechwerkzeug wieder in die Ausgangslage zurückgeschwenkt werden kann, muss das Moment M1 außerhalb des Bodens größer sein als das Moment M2. Dies hat jedoch zur Folge, dass die Kraft F des Rückstellmoments groß sein muss. Wenn die Kraft F des Rückstellmoments jedoch zu groß ist, so bewirkt diese, wenn das Stechwerkzeug 4 sich im Boden befindet, dass das Stechwerkzeug 4 bei hohen Fahrgeschwindigkeiten Schlitze in den Boden 8 zieht. Deshalb sollte die erforderliche Kraft F des Rückstellmoments einerseits möglichst gering sein andererseits aber genügend groß sein, um die Rückstellbewegung schnell genug ausführen zu können.

Das Ausführungsbeispiel aus Fig. 2, das eine Bodenbelüftungsvorrichtung 1 darstellt, die bereits aus dem Stand der Technik bekannt ist, ist in Fig. 4 noch einmal teilweise vergrößert dargestellt. Bei den üblicherweise bekannten Bodenbelüftungsvorrichtungen 1 greift das Rückstellmoment 30 seitlich bezogen auf die Breite an dem Werkzeughalter 6 an. Die Kraft F greift somit in den Kraftangriffspunkt 32 an. Der Werkzeughalter 6 ist einerseits in der Ausgangslage dargestellt und andererseits gestrichelt bei maximaler Auslenkung, wobei sich in dieser Stellung das Stechwerkzeug 4 bereits wieder außerhalb des Bodens 8 befindet. Der wirksame Hebelarm des Moments M1 in der Ausgangslange ist mit a' bezeichnet. Der wirksame Hebelarm des Moments M1 bei maximaler Auslenkung ist mit a" bezeichnet. Es ist deutlich zu erkennen, dass sich der wirksame Hebelarm bei maximaler Auslenkung gegenüber der Ausgangslage von a' auf a" verkleinert hat. Dies ist jedoch nachteilig, da das Rückstellmoment M1 bei maximaler Auslenkung des Werkzeughalters 4 größer sein sollte als in der Ausgangslage.

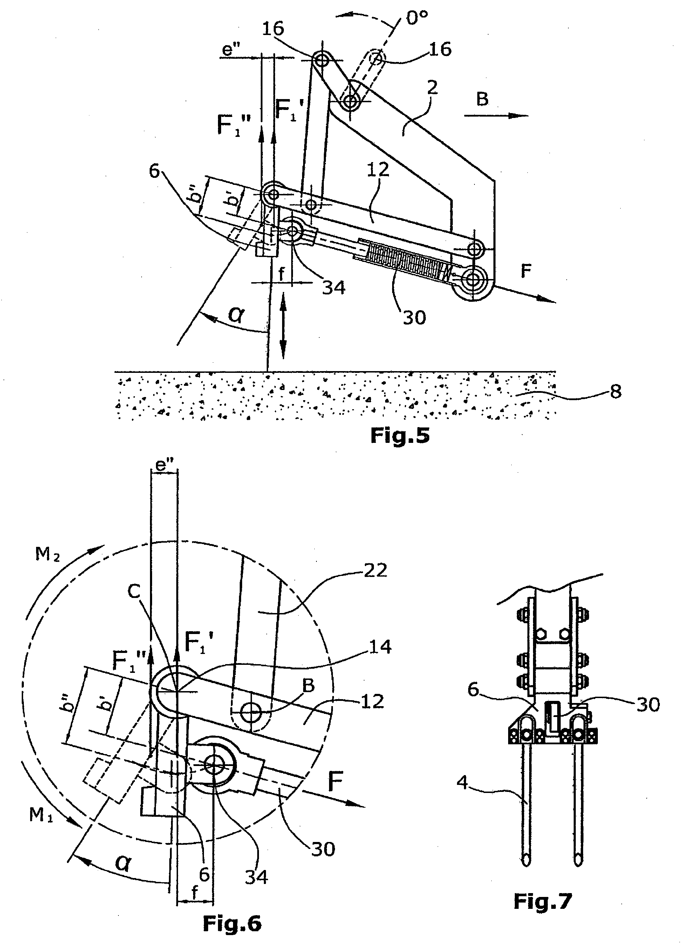

Bei dem Ausführungsbeispiel der vorliegenden Erfindung, das in den Fign. 5 bis 7 dargestellt ist, greift die Kraft F des Rückstellelementes 30 in dem Kraftangriffspunkt 34 an. Der Kraftangriffspunkt 34 ist mit einem Abstand f von der durch die erste Schwenkachse 14 und parallel zu dem Werkzeughalter 6 und dem Stechwerkzeug 4 verlaufenden Ebene und in Richtung der auf den Werkzeughalter 6 einwirkenden Rückstellkraft F des Rückstellelementes 30 versetzt an dem Werkzeughalter 6 angeordnet. Der wirksame Hebelarm des Moments M1 in Ausgangslage ist mit b' bezeichnet. Der wirksame Hebelarm des Moments M1 bei maximaler Auslenkung des Werkzeughalters 6 ist mit b" bezeichnet. Es ist deutlich zu erkennen, dass der wirksame Hebelarm b" bei maximaler Auslenkung des Werkzeughalters 6 deutlich größer ist als der wirksame Hebelarm b' bei Ausgangslage. Ein größerer wirksamer Hebelarm hat auch ein größeres Moment zur Folge.

Die Rückstellkraft F des Röckstellelementes 30 greift in dem Kraftangriffspunkt 34 an einem Vorsprung des Werkzeughalters 6 an. Dieses Ausführungsbeispiel hat den zusätzlichen Vorteil, dass der Gesamtschwerpunkt des Werkzeughalters 6 und des Stechwerkzeugs 4 in Bezug auf die durch die erste Schwenkachse 14 und parallel zu dem Werkzeughalter 6 und dem Stechwerkzeug 4 verlaufenden Ebene leicht nach hinten versetzt ist. Dadurch ist auch der wirksame Hebelarm e" bei maximaler Auslenkung gegenüber dem Hebelarm c" bei dem Ausführungsbeispiel aus Fig. 2 bei maximaler Auslenkung reduziert. Dadurch ist das Trägheitsmoment M2, das bewirkt, dass der Werkzeughalter 6 mit dem Stechwerkzeug 4 bei maximaler Auslenkung des Werkzeughalters 6, und wenn sich das Stechwerkzeug 4 außerhalb des Bodens befindet, nach oben verschwenken will, ebenfalls reduziert.

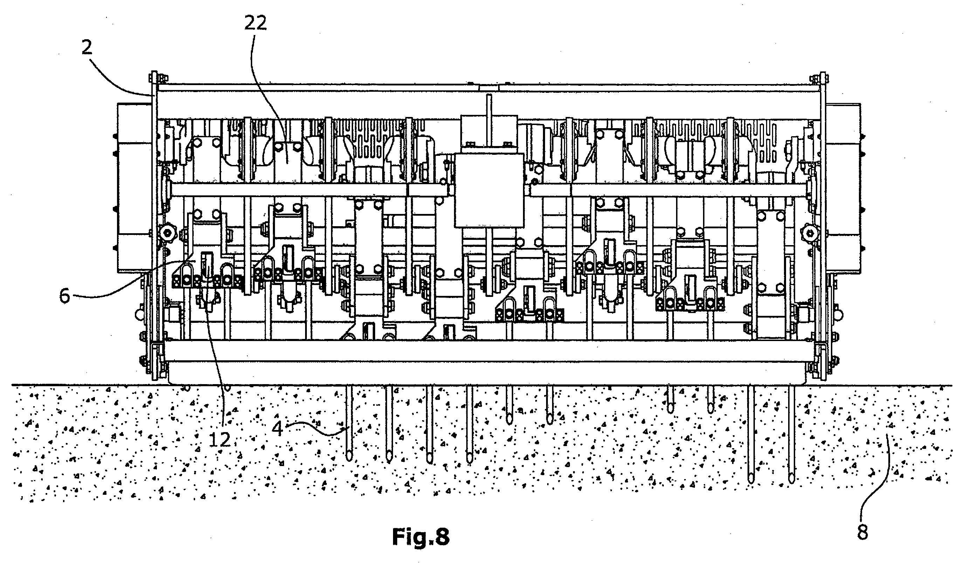

Das Ausführungsbeispiel hat den zusätzlichen Vorteil, dass der Kraftangriffspunkt 34 der Rückstellkraft F mittig zur Breite des Werkzeughalters am Werkzeughalter angelenkt ist. Dies ist in Fig. 7 und Fig.8 dargestellt, wobei Fig. 8 ein erfindunggemäßes Ausführungsbeispiel in der Rückansicht darstellt. Dadurch dass der Kraftangriffspunkt 34 der Rückstellkraft F mittig zur Breite des Werkzeughalters am Werkzeughalter angelenkt ist, kann der Werkzeughalter 6 beim Zurückschwenken in Ausgangslage gegenüber dem Führungsarm 12 nicht verkanten, da die Rückstellkraft mittig zur Breite des Werkzeughalter 6 angreift. Dies schont die Maschinenelemente, insbesondere die Lager, da diese dadurch symmetrisch belastet werden.

## Patentansprüche

1. Fahrbare Bodenbelüftungsvorrichtung (1), mit
- einem Maschinenrahmen (2),
- einem Antrieb,
- mindestens einem von dem Antrieb auf- und abbewegten und an dem Maschinenrahmen (2) schwenkbar angeordneten Führungsarm (12) mit mindestens einem gelenkig mit dem Führungsarm (12) gekoppelten Stechwerkzeug (4), wobei das Stechwerkzeug (4) in den Boden einstechbar und wieder herausziehbar ist,
- einem Werkzeughalter (6) für das Stechwerkzeug (4), der um eine erste Schwenkachse (14) in dem von dem Antrieb auf- und abbewegbaren Führungsarm (12) gelagert ist, um während des Bodeneingriffs ein Verschwenken des Stechwerkzeugs (4) relativ zu dem Führungsarm (12) zu ermöglichen,
- wobei sich das Stechwerkzeug (4) vor dem Einstechen in einer Ausgangslage unter einem vorgegebenen Einstechwinkel befindet,
- wobei zumindest nach dem Herausziehen des Stechwerkzeugs (4) aus dem Boden (8) ein an dem Werkzeughalter (6) angreifendes Rückstellelement (30) das Stechwerkzeug (4) wieder in die Ausgangslage zurückschwenkt, und
- wobei das Rückstellelement (30) mit Abstand von der durch die erste Schwenkachse (14) und parallel zu dem Werkzeughalter (6) und dem Stechwerkzeug (4) verlaufenden Ebene und in Richtung der auf den Werkzeughalter (6) einwirkenden Rückstellkraft des Rückstellelementes (30) versetzt an dem Werkzeughalter (6) angreift
**dadurch gekennzeichnet,**
**dass** der um die erste Schwenkachse (14) wirksame Hebelarm (b', b") der Rückstellkraft bei maximaler Auslenkung des Werkzeughalters (6) relativ zur Ausgangslage vergrößert ist.

2. Bodenbelüftungsvorrichtung (1) nach Anspruch 1, **dadurch gekennzeichnet, dass** das Rückstellelement (30) um einen solchen Betrag versetzt angreift, dass sich der Kraftangriffspunkt (34) des Rückstellelementes (30) bei maximaler Auslenkung des Werkzeughalters (6) in einer durch die erste Schwenkachse (14) verlaufenden im wesentlichen vertikalen Ebene befindet.

3. Bodenbelüftungsvorrichtung (1) nach einem der Ansprüche 1 oder 2, **dadurch gekennzeichnet, dass** das Rückstellelement (30) im wesentlichen parallel zu dem Führungsarm (12) verläuft.

4. Bodenbelüftungsvorrichtung (1) nach einem der Ansprüche 1 bis 3, **dadurch gekennzeichnet, dass** das Rückstellelement (30) gelenkig mit dem Werkzeughalter (6) verbunden ist.

5. Bodenbelüftungsvorrichtung (1) nach einem der Ansprüche 1 bis 4, **dadurch gekennzeichnet, dass** das Rückstellelement (30) eine Zugfeder ist.

6. Bodenbelüftungsvorrichtung (1) nach einem der Ansprüche 1 bis 5, **dadurch gekennzeichnet, dass** das Rückstellelement (30) in einem mit dem Maschinenrahmen (2) und dem Werkzeughalter (6) gelenkig gekoppelten zweiten Führungsarm integriert ist.

7. Bodenbelüftungsvorrichtung (1) nach Anspruch 6, **dadurch gekennzeichnet, dass** der zweite Führungsarm eine Zugkraft auf den Werkzeughalter (6) ausübt, wobei eine Druckfeder die Zugkraft erzeugt.

8. Bodenbelüftungsvorrichtung (1) nach einem der Ansprüche 1 bis 7, **dadurch gekennzeichnet, dass** der Kraftangriffspunkt (34) des Rückstellelementes (30) mittig zur Breite des Werkzeughalters (6) angeordnet ist.

9. Bodenbelüftungsvorrichtung (1) nach einem der Ansprüche 1 bis 8, **dadurch gekennzeichnet, dass** der Kraftangriffspunkt (34) des Rückstellelementes (30) unterhalb der ersten Schwenkachse und in Richtung der auf den Werkzeughalter (6) einwirkenden Rückstellkraft versetzt an einem von dem Werkzeughalter (6) abstehenden Vorsprung angeordnet ist.

10. Bodenbelüftungsvorrichtung (1) nach einem der Ansprüche 1 bis 9, **dadurch gekennzeichnet, dass** der Werkzeughalter (6) mehrere Werkzeuge trägt.

## Claims

1. A mobile soil aeration device (1) comprising
- a machine frame (2),
- a drive,
- at least one guide arm (12) moved up and down by said drive and arrange in a pivotable manner at said machine frame (2), the guide arm comprising at least one piercing tool (4) coupled with the guide arm (12) in an articulated manner, said piercing tool (4) being adapted to be pushed into the soil and to be pulled out from the soil,
- a tool holder (6) for the piercing tool (4), which is supported for movement about a first pivot axis (14) in the guide arm (12) adapted to be moved up and down by the drive, so as to allow for a pivoting of the piercing tool (4) with respect to the guide arm (12) during engagement in the soil,
- wherein, prior to piercing, the piercing tool (4) is in a start position under a predetermined piercing angle, and
- wherein, at least after the piercing tool (4) has been pulled from the soil (8), a restoring element (30) engaging the tool holder (6) pivots the piercing tool (4) back to the start position,
- wherein the restoring element (30) engages a tool holder (6) at a distance from a plane extending through a first pivot axis (14) and in parallel to the tool holder (6) and the piercing tool (4) and offset in the direction of the restoring force of the restoring element (30) acting on the tool holder (6),
**characterized in that**
at least at maximum deflection of the tool holder (6), the lever arm (b', b") of the restoring force active about the first pivot axis (14) is enlarged relative to the start position.

2. The soil aeration device (1) of claim 1, **characterized in that** the restoring element (30) engages offset by such an amount that the force application point (34) of the restoring element (30) at maximum deflection of the tool holder (6) is situated in a substantially vertical plane extending through the first pivot axis (14).

3. The soil aeration device (1) of one of claims 1 or 2, **characterized in that** the restoring element (30) extends substantially in parallel to the guide arm (12).

4. The soil aeration device (1) of one of claims 1 to 3, **characterized in that** the restoring element (30) is articulated to the tool holder (6).

5. The soil aeration device (1) of one of claims 1 to 4, **characterized in that** the restoring element (30) is a tension spring.

6. The soil aeration device (1) of one of claims 1 to 5, **characterized in that** the restoring element (30) is integrated in a second guide arm articulated to the machine frame (2) and the tool holder (6).

7. The soil aeration device (1) of claim 6, **characterized in that** the second guide arm exerts a tensile force on the tool holder (6), the tensile force being generated by a compression spring.

8. The soil aeration device (1) of one of claims 1 to 7, **characterized in that** the force application point (34) of the restoring element (30) is situated centrally with respect to the width of the tool holder (6).

9. The soil aeration device (1) of one of claims 1 to 8, **characterized in that** the force application point (34) of the restoring element (30) is situated on a projection protruding from the tool holder (6), below the first pivot axis and offset in the direction of the restoring force acting on the tool holder (6).

10. The soil aeration device (1) of one of claims 1 to 9, **characterized in that** the tool holder (6) carries a plurality of tools.

## Revendications

1. Dispositif d'aération du sol (1) mobile,
- avec un bâti de machine (2),
- un entraînement,
- au moins un bras de guidage (12) animé d'un mouvement vers le haut et le bas par l'entraînement et disposé en pivotement sur le bâti de machine (2), avec au moins un outil de perçage (4) couplé de façon articulée au bras de guidage (12), l'outil de perçage (4) pouvant être enfoncé dans le sol puis en être extrait,
- un porte-outil (6) pour l'outil de perçage (4), qui est supporté autour d'un premier axe pivotant (14) dans le bras de guidage (12) pouvant être animé d'un mouvement vers le haut et le bas par l'entraînement pour permettre pendant l'enfoncement dans le sol un pivotement de l'outil de perçage (4) par rapport au bras de guidage (12),
- l'outil de perçage (4) se trouvant, avant l'enfoncement, dans une position initiale formant un angle d'enfoncement prédéfini,
- un élément de rappel (30) agissant sur le porte-outil (6) ramenant par pivotement l'outil de perçage (4) dans la position initiale au moins après l'extraction de l'outil de perçage (4) hors du sol (8), et
- l'élément de rappel (30) agissant de façon décalée sur le porte-outil (6) à distance du plan traversant le premier axe pivotant (14) et parallèle au porte-outil (6) et à l'outil de perçage (4) et en direction de la force de rappel de l'élément de rappel (30) qui agit sur le porte-outil (6),
**caractérisé en ce que**
le bras de levier (b', b"), agissant autour du premier axe pivotant (14), de la force de rappel est augmenté pour une déviation maximale du porte-outil (6) par rapport à la position initiale.

2. Dispositif d'aération du sol (1) selon la revendication 1, **caractérisé en ce que** l'élément de rappel (30) agit avec un décalage d'une valeur telle que le point d'application de la force (34) de l'élément de rappel (30) se trouve, pour une déviation maximale du porte-outil (6), dans un plan essentiellement vertical traversant le premier axe pivotant (14).

3. Dispositif d'aération du sol (1) selon l'une des revendications 1 ou 2, **caractérisé en ce que** l'élément de rappel (30) est essentiellement parallèle au bras de guidage (12).

4. Dispositif d'aération du sol (1) selon l'une des revendications 1 à 3, **caractérisé en ce que** l'élément de rappel (30) est raccordé de façon articulée au porte-outil (6).

5. Dispositif d'aération du sol (1) selon l'une des revendications 1 à 4, **caractérisé en ce que** l'élément de rappel (30) est un ressort de traction.

6. Dispositif d'aération du sol (1) selon l'une des revendications 1 à 5, **caractérisé en ce que** l'élément de rappel (30) est intégré dans un deuxième bras de guidage couplé de façon articulée au bâti de machine (2) et au porte-outil (6).

7. Dispositif d'aération du sol (1) selon la revendication 6, **caractérisé en ce que** le deuxième bras de guidage exerce une force de traction sur le porte-outil (6), un ressort de pression produisant la force de traction.

8. Dispositif d'aération du sol (1) selon l'une des revendications 1 à 7, **caractérisé en ce que** le point d'application de la force (34) de l'élément de rappel (30) est disposé de façon centrée par rapport à la largeur du porte-outil (6).

9. Dispositif d'aération du sol (1) selon l'une des revendications 1 à 8, **caractérisé en ce que** le point d'application de la force (34) de l'élément de rappel (30) est disposé de façon décalée sur une saillie dépassant du porte-outil (6), au-dessous du premier axe pivotant et en direction de la force de rappel agissant sur le porte-outil (6).

10. Dispositif d'aération du sol (1) selon l'une des revendications 1 à 9, **caractérisé en ce que** le porte-outil (6) porte plusieurs outils.
